# EUROPEAN PATENT SPECIFICATION

(11) **EP 4 192 670 B1**
(45) Date of publication and mention of the grant of the patent: **09.10.2024**
(21) Application number: 21752712.6
(22) Date of filing: 05.08.2021
(51) Int. Cl.: B29C 64/118, B29C 64/321, D01D 5/24, D01D 5/34, B33Y 70/00, B33Y 30/00

(54) **CONTINUOUS HOLLOW TUBE PRINTING USING FDM**
KONTINUIERLICHER HOHLROHRDRUCK UNTER VERWENDUNG VON FDM
PROCÉDÉ ET OBJETS OBTENUS PAR IMPRESSION À L'AIDE D'UN TUBE CREUX EN CONTINU UTILISANT LE MODELAGE PAR DÉPÔT EN FUSION

(30) Priority: 06.08.2020 EP 20189738
(43) Date of publication of application: 14.06.2023
(73) Proprietor: Signify Holding B.V., 5656 AE Eindhoven (NL)
(72) Inventor: VAN BOMMEL, Ties, 5656 AE Eindhoven (NL); HIKMET, Rifat Ata Mustafa, 5656 AE Eindhoven (NL)
(74) Representative: Verweij, Petronella Daniëlle
(86) International application number: PCT/EP2021/071831
(87) International publication number: WO 2022/029211

(56) References cited:
- WO-A1-2018/106705
- US-A1- 2017 151 728

## Description

### FIELD OF THE INVENTION

The invention relates to a method for manufacturing a 3D (printed) item.

### BACKGROUND OF THE INVENTION

The use of core-shell structures for preparing 3D articles is known in the art. For instance, WO2020048889 describes a method for producing a 3D item by means of fused deposition modelling (FDM), the method comprising: a 3D printing stage comprising layer-wise depositing an extrudate comprising 3D printable material, wherein during at least part of the 3D printing stage the extrudate comprises a core-shell extrudate comprising a core comprising a core material, and a shell comprising a shell material, to provide the 3D item comprising 3D printed material, wherein the 3D item comprises a plurality of layers of 3D printed material, wherein one or more of layers comprises one or more core-shell layer parts, wherein each of the core-shell layer parts comprises a layer core comprising the core material, and a layer shell comprising the shell material, wherein the 3D item has an item surface defined by at least part of the 3D printed material; an exposure stage comprising exposing at least part of the item surface to a liquid, wherein the core material has core material solubility SC1 for the liquid and wherein the shell material has a shell material solubility SS 1 for the liquid, wherein SC1<SS2. WO2018/106705 A1 describes a method for producing a 3D item according to the preamble of the appended claim 1.

### SUMMARY OF THE INVENTION

Within the next 10-20 years, digital fabrication will increasingly transform the nature of global manufacturing. One of the aspects of digital fabrication is 3D printing. Currently, many different techniques have been developed in order to produce various 3D printed objects using various materials such as ceramics, metals and polymers. 3D printing can also be used in producing molds which can then be used for replicating objects.

For the purpose of making molds, the use of polyjet technique has been suggested. This technique makes use of layer by layer deposition of photo-polymerizable material which is cured after each deposition to form a solid structure. While this technique produces smooth surfaces the photo curable materials are not very stable, and they also have relatively low thermal conductivity to be useful for injection molding applications.

The most widely used additive manufacturing technology is the process known as Fused Deposition Modeling (FDM). Fused deposition modeling (FDM) is an additive manufacturing technology commonly used for modeling, prototyping, and production applications. FDM works on an "additive" principle by laying down material in layers; a plastic filament or metal wire is unwound from a coil and supplies material to produce a part. Possibly, (for thermoplastics for example) the filament is melted and extruded before being laid down. FDM is a rapid prototyping technology. Other terms for FDM are "fused filament fabrication" (FFF) or "filament 3D printing" (FDP), which are considered to be equivalent to FDM. In general, FDM printers use a thermoplastic filament, which is heated to its melting point and then extruded, layer by layer, (or in fact filament after filament) to create a three-dimensional object. FDM printers are relatively fast, low cost and can be used for printing complicated 3D objects. Such printers are used in printing various shapes using various polymers. The technique is also being further developed in the production of LED luminaires and lighting solutions.

It appears desirable to reduce the weight of the printed 3D item, such as a luminaire (part), as well as reduce the amount of material used in printing the 3D item.

Hence, it is an aspect of the invention to provide an alternative 3D printing method which preferably further at least partly obviate(s) one or more of above-described drawbacks. The present invention may have as object to overcome or ameliorate at least one of the disadvantages of the prior art, or to provide a useful alternative.

Hence, the invention provides a method for producing a 3D item by means of fused deposition modelling using a fused deposition modeling 3D printer, according to the appended claim 1. Preferred embodiments of the method according to the invention are defined in the appended claims 2-8. Especially, the method comprises a 3D printing stage comprising layer-wise depositing core-shell-shell material via a printer nozzle on a receiver item. The core-shell-shell material comprises a hollow tube comprising a hollow core and a first shell enclosing the hollow core, and 3D printable material at least partly enclosing the first shell, to provide the 3D item. The 3D item (thereby) comprises a core-shell-shell layer, wherein the core-shell-shell layer may comprise the hollow tube comprising the hollow core and the first shell enclosing the hollow core, and 3D printed material at least partly enclosing the first shell thereby forming a second shell. Hence, in specific embodiments the invention provides a method for producing a 3D item by means of fused deposition modelling using a fused deposition modeling 3D printer, the method comprising a 3D printing stage comprising layer-wise depositing core-shell-shell material via a printer nozzle on a receiver item, wherein the core-shell-shell material comprises a hollow tube comprising a hollow core and a first shell enclosing the hollow core, and 3D printable material at least partly enclosing the first shell, to provide the 3D item comprising a core-shell-shell layer, wherein the core-shell-shell layer comprises the hollow tube comprising the hollow core and the first shell enclosing the hollow core, and 3D printed material at least partly enclosing the first shell.

In this way, it may be possible to prepare 3D printed items by means of FDM, whilst reducing the amount of material used, thus reducing the weight of the printed objects whilst maintaining the structural integrity and the smooth surface structure of the printed items. This is achieved by printing a hollow tube as core and a non-porous shell.

For introducing the hollow tube into the printing material, a plurality of methods is possible. A non-limiting number of embodiments is described below.

It may be useful to use a standard FDM printer (with a core-shell nozzle). In embodiments, the printer nozzle may comprise a core-shell printer nozzle comprising a core nozzle part and a shell nozzle part. Especially, the method may comprise feeding the hollow tube via the core nozzle part and feeding the 3D printable material via the shell nozzle part.

In embodiments, the fused deposition modeling 3D printer may comprise a printer head, wherein the printer head may comprise the printer nozzle. Especially, the printer head may comprise a first material entrance for the 3D printable material and a second material entrance for the (hollow) tube, wherein the first material entrance, the second material entrance are in fluid contact with the printer nozzle. Such second material entrance may also be a side entrance; the first material entrance may be a top entrance.

In embodiments, the method may comprise applying a glidant to the first shell of the hollow tube for guiding the hollow tube to the center of the layer. This glidant is optional. The glidant may e.g. comprise a fatty substance which may in embodiments melt or may in other embodiments not melt at the temperature of the nozzle during printing.

In embodiments, the method may comprise using a filament comprising the core-shell-shell material, and wherein the method comprises layer-wise depositing the filament via the printer nozzle to provide the core-shell-shell layer.

In embodiments, the fused deposition modeling 3D printer may further comprise a cutting element configured to cut the hollow tube, wherein the method comprises the 3D printing stage comprising layer-wise depositing the core-shell-shell material comprising the hollow tube and a 3D printing stage printing 3D printable material in the absence of the hollow tube, to provide the 3D item comprising the core-shell-shell layer comprises the hollow tube and comprising a layer without the hollow tube. The cutting device may comprise a cutting element, like a knife element, or a saw element, or any other physical filament that may be used to cut the (hollow) tube. The cutting element may also comprise a heated wire, with which the (hollow) tube may be cut. In yet alternative embodiments, see also below, when the material of the first shell (i.e. the first shell material) has a melting temperature, the material of the first shell may be heated in the nozzle above the melting temperature, by which cutting element may effectively cut the (hollow) tube. Hence, in specific embodiments the cutting element may comprise a heating element. Alternatively, the printer head as such may have such functionality. Hence, during printing temporarily the temperature may be increased above the melting temperature of the material of the first shell material, leading to a cutting of the (hollow) tube.

In embodiments, the first shell comprises first shell material, wherein the first shell material is crosslinked. The crosslinked material might have a higher melting temperature Tm1 and be less prone to be damaged during the printing process.

According to the invention, the first shell comprises first shell material having a first glass transition temperature Tg1. Further, the 3D printable material has a second glass transition temperature Tg2.

According to the invention Tg2<Tg. The method according to the invention comprises 3D printing the 3D printable material with a printer nozzle temperature lower than the first glass transition temperature Tg1, and higher than the second glass transition temperature Tg2. In embodiments, the printer nozzle temperature may be lower than the first glass transition temperature Tg1, and higher than the second melting temperature Tm2. Therefore, the first shell comprises first shell material having a first glass transition temperature Tg1, the 3D printable material has a second glass transition temperature Tg2, wherein Tg2<Tg1, and wherein the method (further) comprises 3D printing the 3D printable material with a printer nozzle temperature lower than the first glass transition temperature Tg1, and higher than the second glass transition temperature Tg2.

The method according to the present application comprises a cutting stage comprising temporarily heating the printer nozzle to a temperature above first melting temperature Tg1. Furthermore heating the hollow tube above first melting temperature Tm1 may cause discontinuation of printing the hollow tube, whilst printing the second shell may be uninterrupted. In specific embodiments, the heating of the printer nozzle may be locally, such that essentially only the (hollow) tube is subjected to a temperature above first melting temperature Tm1. In yet further embodiments, however, the method may further comprise a cutting stage comprising: temporarily apply heat with the cutter element to the (hollow) tube to increase the temperature above first melting temperature Tm1, thereby cutting the (hollow) tube. Especially, the cutting element may be configured upstream of the printer head. Hence, while continuing 3D printing of the 3D printable material, at least temporarily no (hollow) tube is fed. In this way a 3D printed item may be printed with one or more layers comprising a hollow tube and one or more other layers not comprising a hollow tube.

After cutting, 3D printing may commence without a tube within the layer(s). Of course, if desired, 3D printing with the tube may also be continued, unit yet a next cutting. In this way, at desired positions tubular 3D printed layers may be provided (or parts of layers).

In embodiments, the method may further comprise a synchronizing stage comprising: rotating the hollow tube in a synchronized manner with a movement of the printer nozzle in respect to the receiver item in order to avoid twisting of the tube during printing.

In embodiments, the method may further comprise a synchronizing stage comprising rotating the receiver item in order to avoid twisting of the tube during printing.

In embodiments, the hollow tube may have a diameter d of 0.2mm≤d≤20mm, especially 0.5mm≤d≤15mm, more especially 1mm≤d≤10mm.

In embodiments, the hollow tube may have a wall thickness t of 0.02mm≤t≤1mm, especially 0.05mm≤t≤0.5mm, more especially 0.1mm≤t≤0.3mm. With such dimensions, there may still be a decrease in the weight of the material, while also allow a relatively strong or robust tubular element. Further, such dimension may allow 3D printing without necessarily adapting a 3D printer.

The density reduction that may be obtained, may depend on the selection of several parameters, which may e.g. include: the first shell material, the hollow tube diameter d, the hollow tube wall thickness t, a second shell width W2, and 3D printing conditions. In embodiments, a density reduction of the core-shell-shell layer of more than 10%, especially more than 20%, more especially more than 30% may be obtained, compared to the theoretical maximum density that is obtained when no hollow tube was incorporated in the 3D printable material.

When a shell width varies over a cross-section of a filament or a layer, especially the maximum shell width may be chosen.

In embodiments, the first shell material may be flexible. In specific embodiments, the first shell material may be elastomeric.

In embodiments, the first shell material may be thermosetting or thermoplastic.

In embodiments, the first shell material may be translucent or transparent. In embodiments, the first shell material may be reflective.

In embodiments, the second shell material may be translucent or transparent. In embodiments, the second shell material may be reflective.

As indicated above, the method comprises depositing during a printing stage 3D printable material. Herein, the term "3D printable material" refers to the material to be deposited or printed, and the term "3D printed material" refers to the material that is obtained after deposition. These materials may be essentially the same, as the 3D printable material may especially refer to the material in a printer head or extruder at elevated temperature and the 3D printed material refers to the same material, but in a later stage when deposited. The 3D printable material is printed as a filament and deposited as such. The 3D printable material may be provided as filament or may be formed into a filament. Hence, whatever starting materials are applied, a filament comprising 3D printable material is provided by the printer head and 3D printed. The term "extrudate" may be used to define the 3D printable material downstream of the printer head, but not yet deposited. The latter is indicated as "3D printed material". In fact, the extrudate comprises 3D printable material, as the material is not yet deposited. Upon deposition of the 3D printable material or extrudate, the material is thus indicated as 3D printed material. Essentially, the materials are the same material, as the thermoplastic material upstream of the printer head, downstream of the printer head, and when deposited, is essentially the same material.

Herein, the term "3D printable material" may also be indicated as "printable material. The term "polymeric material" may in embodiments refer to a blend of different polymers but may in embodiments also refer to essentially a single polymer type with different polymer chain lengths. Hence, the terms "polymeric material" or "polymer" may refer to a single type of polymers but may also refer to a plurality of different polymers. The term "printable material" may refer to a single type of printable material but may also refer to a plurality of different printable materials. The term "printed material" may refer to a single type of printed material but may also refer to a plurality of different printed materials.

Hence, the term "3D printable material" may also refer to a combination of two or more materials. In general, these (polymeric) materials have a glass transition temperature T_{g} and/or a melting temperature Tₘ. The 3D printable material will be heated by the 3D printer before it leaves the nozzle to a temperature of at least the glass transition temperature, and in general at least the melting temperature. Hence, in a specific embodiment the 3D printable material comprises a thermoplastic polymer having a glass transition temperature (T_{g}) and /or a melting point (Tₘ), and the printer head action comprises heating the 3D printable material above the glass transition and if it is a semi-crystalline polymer above the melting temperature. In yet another embodiment, the 3D printable material comprises a (thermoplastic) polymer having a melting point (Tₘ), and the printer head action comprises heating the 3D printable material to be deposited on the receiver item to a temperature of at least the melting point. The glass transition temperature is in general not the same thing as the melting temperature. Melting is a transition which occurs in crystalline polymers. Melting happens when the polymer chains fall out of their crystal structures and become a disordered liquid. The glass transition is a transition which happens to amorphous polymers; that is, polymers whose chains are not arranged in ordered crystals, but are just strewn around in any fashion, even though they are in the solid state. Polymers can be amorphous, essentially having a glass transition temperature and not a melting temperature or can be (semi) crystalline, in general having both a glass transition temperature and a melting temperature, with in general the latter being larger than the former. The glass temperature may e.g. be determined with differential scanning calorimetry. The melting point or melting temperature can also be determined with differential scanning calorimetry.

As indicated above, the invention thus provides a method comprising providing a filament of 3D printable material and printing during a printing stage said 3D printable material on a substrate, to provide said 3D item.

It may be possible to prepare 3D printed items with a hollow core by means of FDM, whilst starting from a previously prepared filament.

In embodiments, the first shell comprises first shell material, wherein the first shell material is crosslinked.

Materials that may especially qualify as 3D printable materials may be selected from the group consisting of metals, glasses, thermoplastic polymers, silicones, etc... Especially, the 3D printable material comprises a (thermoplastic) polymer selected from the group consisting of ABS (acrylonitrile butadiene styrene), Nylon (or polyamide), Acetate (or cellulose), PLA (poly lactic acid), terephthalate (such as PET polyethylene terephthalate), Acrylic (polymethylacrylate, Perspex, polymethylmethacrylate, PMMA), Polypropylene (or polypropene), Polycarbonate (PC), Polystyrene (PS), PE (such as expanded- high impact-Polythene (or polyethene), Low density (LDPE) High density (HDPE)), PVC (polyvinyl chloride) Polychloroethene, such as thermoplastic elastomer based on copolyester elastomers, polyurethane elastomers, polyamide elastomers polyolefine based elastomers, styrene based elastomers, etc... Optionally, the 3D printable material comprises a 3D printable material selected from the group consisting of Urea formaldehyde, Polyester resin, Epoxy resin, Melamine formaldehyde, thermoplastic elastomer, etc... Optionally, the 3D printable material comprises a 3D printable material selected from the group consisting of a polysulfone. Elastomers, especially thermoplastic elastomers, are especially interesting as they are flexible and may help obtaining relatively more flexible filaments comprising the thermally conductive material. A thermoplastic elastomer may comprise one or more of styrenic block copolymers (TPS (TPE-s)), thermoplastic polyolefin elastomers (TPO (TPE-o)), thermoplastic vulcanizates (TPV (TPE-v or TPV)), thermoplastic polyurethanes (TPU (TPU)), thermoplastic copolyesters (TPC (TPE-E)), and thermoplastic polyamides (TPA (TPE-A)).

Suitable thermoplastic materials, such as also mentioned in WO2017/040893, may include one or more of polyacetals (e.g., polyoxyethylene and polyoxymethylene), poly(C₁₋₆ alkyl)acrylates, polyacrylamides, polyamides, (e.g., aliphatic polyamides, polyphthalamides, and polyaramides), polyamideimides, polyanhydrides, polyarylates, polyarylene ethers (e.g., polyphenylene ethers), polyarylene sulfides (e.g., polyphenylene sulfides), polyarylsulfones (e.g., polyphenylene sulfones), polybenzothiazoles, polybenzoxazoles, polycarbonates (including polycarbonate copolymers such as polycarbonate-siloxanes, polycarbonate-esters, and polycarbonate-ester-siloxanes), polyesters (e.g., polycarbonates, polyethylene terephthalates, polyethylene naphtholates, polybutylene terephthalates, polyarylates), and polyester copolymers such as polyester-ethers), polyetheretherketones, polyetherimides (including copolymers such as polyetherimide-siloxane copolymers), polyetherketoneketones, polyetherketones, polyethersulfones, polyimides (including copolymers such as polyimide- siloxane copolymers), poly(C₁₋₆ alkyl)methacrylates, polymethacrylamides, polynorbornenes (including copolymers containing norbornenyl units), polyolefins (e.g., polyethylenes, polypropylenes, polytetrafluoroethylenes, and their copolymers, for example ethylene- alpha- olefin copolymers), polyoxadiazoles, polyoxymethylenes, polyphthalides, polysilazanes, polysiloxanes, polystyrenes (including copolymers such as acrylonitrile-butadiene-styrene (ABS) and methyl methacrylate-butadiene-styrene (MBS)), polysulfides, polysulfonamides, polysulfonates, polysulfones, polythioesters, polytriazines, polyureas, polyurethanes, polyvinyl alcohols, polyvinyl esters, polyvinyl ethers, polyvinyl halides, polyvinyl ketones, polyvinyl thioethers, polyvinylidene fluorides, or the like, or a combination comprising at least one of the foregoing thermoplastic polymers. Embodiments of polyamides may include, but are not limited to, synthetic linear polyamides, e.g., Nylon-6,6; Nylon-6,9; Nylon-6,10; Nylon-6,12; Nylon-11; Nylon-12 and Nylon-4,6, preferably Nylon 6 and Nylon 6,6, or a combination comprising at least one of the foregoing. Polyurethanes that can be used include aliphatic, cycloaliphatic, aromatic, and polycyclic polyurethanes, including those described above. Also useful are poly(C₁₋₆ alkyl)acrylates and poly(C₁₋₆ alkyl)methacrylates, which include, for instance, polymers of methyl acrylate, ethyl acrylate, acrylamide, methacrylic acid, methyl methacrylate, n-butyl acrylate, and ethyl acrylate, etc... In embodiments, a polyolefine may include one or more of polyethylene, polypropylene, polybutylene, polymethylpentene (and co-polymers thereof), polynorbornene (and co-polymers thereof), poly 1-butene, poly(3-methylbutene), poly(4-methylpentene) and copolymers of ethylene with propylene, 1-butene, 1-hexene, 1-octene, 1-decene, 4-methyl-1-pentene and 1-octadecene.

In specific embodiments, the 3D printable material (and the 3D printed material) comprise one or more of polycarbonate (PC), polyethylene (PE), high-density polyethylene (HDPE), polypropylene (PP), polyoxymethylene (POM), polyethylene naphthalate (PEN), styrene-acrylonitrile resin (SAN), polysulfone (PSU), polyphenylene sulfide (PPS), and semi-crystalline polytethylene terephthalate (PET), acrylonitrile butadiene styrene (ABS), poly(methyl methacrylate) (PMMA), polystyrene (PS), and styrene acrylic copolymers (SMMA).

The term 3D printable material is further also elucidated below, but especially refers to a thermoplastic material, optionally including additives, to a volume percentage of at maximum about 60%, especially at maximum about 30 vol.%, such as at maximum 20 vol.% (of the additives relative to the total volume of the thermoplastic material and additives).

The printable material may thus in embodiments comprise two phases. The printable material may comprise a phase of printable polymeric material, especially thermoplastic material (see also below), which phase is especially an essentially continuous phase. In this continuous phase of thermoplastic material polymer additives such as one or more of antioxidant, heat stabilizer, light stabilizer, ultraviolet light stabilizer, ultraviolet light absorbing additive, near infrared light absorbing additive, infrared light absorbing additive, plasticizer, lubricant, release agent, antistatic agent, anti-fog agent, antimicrobial agent, colorant, laser marking additive, surface effect additive, radiation stabilizer, flame retardant, anti-drip agent may be present. The additive may have useful properties selected from optical properties, electrical properties, thermal properties, and mechanical properties (see also above).

The printable material in embodiments may comprise particulate material, i.e. particles embedded in the printable polymeric material, which particles form a substantially discontinuous phase. The number of particles in the total mixture is especially not larger than 60 vol.%, relative to the total volume of the printable material (including the (anisotropically conductive) particles) especially in applications for reducing thermal expansion coefficient. For optical and surface related effect number of particles in the total mixture is equal to or less than 20 vol.%, such as up to 10 vol.%, relative to the total volume of the printable material (including the particles). Hence, the 3D printable material especially refers to a continuous phase of essentially thermoplastic material, wherein other materials, such as particles, may be embedded. Likewise, the 3D printed material especially refers to a continuous phase of essentially thermoplastic material, wherein other materials, such as particles, are embedded. The particles may comprise one or more additives as defined above. Hence, in embodiments the 3D printable materials may comprises particulate additives.

The printable material is printed on a receiver item. Especially, the receiver item can be the building platform or can be comprised by the building platform. The receiver item can also be heated during 3D printing. However, the receiver item may also be cooled during 3D printing.

The phrase "printing on a receiver item" and similar phrases include amongst others directly printing on the receiver item, or printing on a coating on the receiver item, or printing on 3D printed material earlier printed on the receiver item. The term "receiver item" may refer to a printing platform, a print bed, a substrate, a support, a build plate, or a building platform, etc... Instead of the term "receiver item" also the term "substrate" may be used. The phrase "printing on a receiver item" and similar phrases include amongst others also printing on a separate substrate on or comprised by a printing platform, a print bed, a support, a build plate, or a building platform, etc... Therefore, the phrase "printing on a substrate" and similar phrases include amongst others directly printing on the substrate, or printing on a coating on the substrate or printing on 3D printed material earlier printed on the substrate. Here below, further the term substrate is used, which may refer to a printing platform, a print bed, a substrate, a support, a build plate, or a building platform, etc..., or a separate substrate thereon or comprised thereby.

Layer by layer printable material is deposited, by which the 3D printed item is generated (during the printing stage). The 3D printed item may show a characteristic ribbed structure (originating from the deposited filaments). However, it may also be possible that after a printing stage, a further stage is executed, such as a finalization stage. This stage may include removing the printed item from the receiver item and/or one or more post processing actions. One or more post processing actions may be executed before removing the printed item from the receiver item and/or one more post processing actions may be executed after removing the printed item from the receiver item. Post processing may include e.g. one or more of polishing, coating, adding a functional component, cross-linking, etc... Post-processing may include smoothening the ribbed structures, which may lead to an essentially smooth surface. Post-processing may include cross-linking of the thermoplastic material. This may result in fewer or no thermoplastic properties of the material.

The herein described method provides 3D printed items. Hence, the disclosure also provides in a further aspect a 3D printed item obtainable with the herein described method. In a further aspect a 3D printed item obtainable with the herein described method is provided.

The (with the herein described method) obtained 3D printed item may be functional per se. For instance, the 3D printed item may be a lens, a collimator, a reflector, etc... The thus obtained 3D item may (alternatively) be used for decorative or artistic purposes. The 3D printed item may include or be provided with a functional component. The functional component may especially be selected from the group consisting of an optical component, an electrical component, and a magnetic component. The term "optical component" especially refers to a component having an optical functionality, such as a lens, a mirror, a light transmissive element, an optical filter, etc... The term optical component may also refer to a light source (like a LED). The term "electrical component" may e.g. refer to an integrated circuit, PCB, a battery, a driver, but also a light source (as a light source may be considered an optical component and an electrical component), etc... The term magnetic component may e.g. refer to a magnetic connector, a coil, etc... Alternatively, or additionally, the functional component may comprise a thermal component (e.g. configured to cool or to heat an electrical component). Hence, the functional component may be configured to generate heat or to scavenge heat, etc...

As indicated above, the 3D printed item maybe used for different purposes. Amongst others, the 3D printed item maybe used in lighting.

Returning to the 3D printing process, a specific 3D printer may be used to provide the 3D printed item described herein.

In embodiments, the fused deposition modeling 3D printer may further comprise a rotatable hollow tube reel associated with a mechanism to rotate the hollow tube reel configured to rotate the hollow tube in a synchronized manner with a movement of the printer nozzle in respect to the receiver item in order to avoid twisting of the tube during printing.

Note that the herein described 3D printer may also be applied for 3D printing non-hollow tubes.

The printer nozzle may include a single opening. In other embodiments, the printer nozzle may be of the core-shell type, having two (or more) openings. The term "printer head" may also refer to a plurality of (different) printer heads; hence, the term "printer nozzle" may also refer to a plurality of (different) printer nozzles.

The 3D printable material providing device may provide a filament comprising 3D printable material to the printer head or may provide the 3D printable material as such, with the printer head creating the filament comprising 3D printable material. Hence, in embodiments the invention provides a fused deposition modeling 3D printer, comprising (a) a printer head comprising a printer nozzle, and (b) a filament providing device configured to provide a filament comprising 3D printable material to the printer head, wherein the fused deposition modeling 3D printer is configured to provide said 3D printable material to a substrate, as indicated above.

Especially, the 3D printer comprises a controller (or is functionally coupled to a controller) that is configured to execute in a controlling mode (or "operation mode") the method as described herein. Instead of the term "controller" also the term "control system" (see e.g. above) may be applied.

The term "controlling", and similar terms especially refer at least to determining the behavior or supervising the running of an element. Hence, herein "controlling" and similar terms may e.g. refer to imposing behavior to the element (determining the behavior or supervising the running of an element), etc..., such as e.g. measuring, displaying, actuating, opening, shifting, changing temperature, etc... Beyond that, the term "controlling", and similar terms may additionally include monitoring. Hence, the term "controlling", and similar terms may include imposing behavior on an element and also imposing behavior on an element and monitoring the element. The controlling of the element can be done with a control system, which may also be indicated as "controller". The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems. A control system may comprise or may be functionally coupled to a user interface.

The control system may also be configured to receive and execute instructions form a remote control. In embodiments, the control system may be controlled via an App on a device, such as a portable device, like a Smartphone or iPhone, a tablet, etc... The device is thus not necessarily coupled to the lighting system but may be (temporarily) functionally coupled to the lighting system.

Hence, in embodiments the control system may (also) be configured to be controlled by an App on a remote device. In such embodiments the control system of the lighting system may be a slave control system or control in a slave mode. For instance, the lighting system may be identifiable with a code, especially a unique code for the respective lighting system. The control system of the lighting system may be configured to be controlled by an external control system which has access to the lighting system on the basis of knowledge (input by a user interface of with an optical sensor (e.g. QR code reader) of the (unique) code. The lighting system may also comprise means for communicating with other systems or devices, such as on the basis of Bluetooth, WIFI, LiFi, ZigBee, BLE or WiMAX, or another wireless technology.

The system, or apparatus, or device may execute an action in a "mode" or "operation mode" or "mode of operation". Likewise, in a method an action or stage, or step may be executed in a "mode" or "operation mode" or "mode of operation" or "operational mode". The term "mode" may also be indicated as "controlling mode". This does not exclude that the system, or apparatus, or device may also be adapted for providing another controlling mode, or a plurality of other controlling modes. Likewise, this may not exclude that before executing the mode and/or after executing the mode one or more other modes may be executed.

However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability).

Hence, in embodiments, the control system may control in dependence of one or more of an input signal of a user interface, a sensor signal (of a sensor), and a timer. The term "timer" may refer to a clock and/or a predetermined time scheme.

Instead of the term "fused deposition modeling (FDM) 3D printer" shortly the terms "3D printer", "FDM printer" or "printer" may be used. The printer nozzle may also be indicated as "nozzle" or sometimes as "extruder nozzle".

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1a-1e schematically depict some general aspects of the 3D printer and of an embodiment of 3D printed material;
Fig. 2 schematically depicts some further aspects of the method of the invention;
Fig. 3 schematically depicts some further aspects of the method of the invention; and
Fig. 4 schematically depicts an application.

The schematic drawings are not necessarily to scale.

### DETAILED DESCRIPTION OF THE EMBODIMENTS

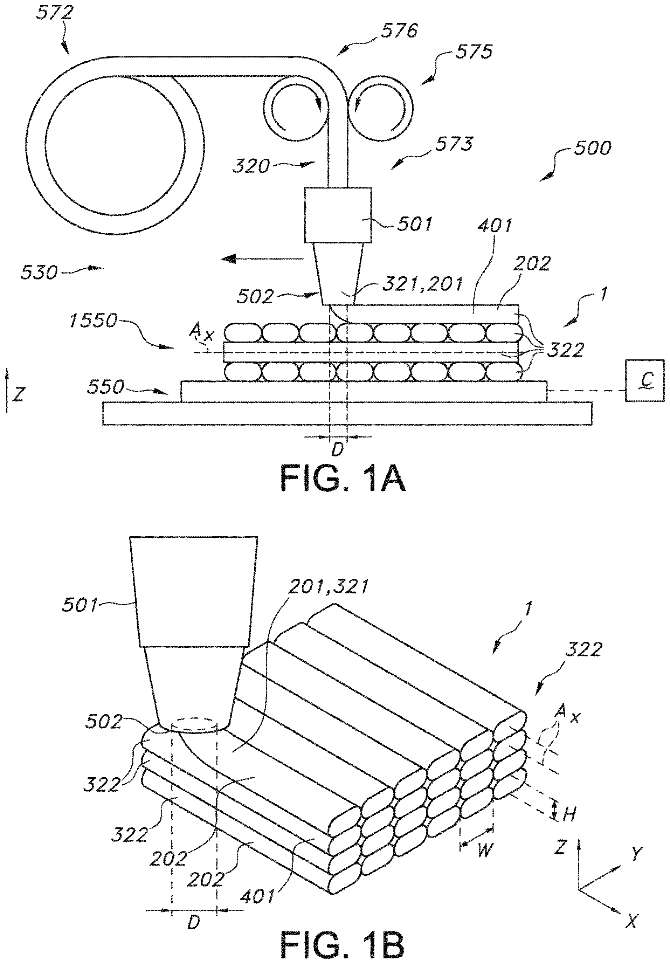

Fig. 1a schematically depicts some aspects of the 3D printer. Reference 500 indicates a 3D printer. Reference 530 indicates the functional unit configured to 3D print, especially FDM 3D printing; this reference may also indicate the 3D printing stage unit. Here, only the printer head for providing 3D printed material, such as an FDM 3D printer head is schematically depicted. Reference 501 indicates the printer head. The 3D printer of the present invention may especially include a plurality of printer heads (see below). Reference 502 indicates a printer nozzle. The 3D printer for use in the present invention may especially include a plurality of printer nozzles, though other embodiments are also possible. Reference 320 indicates a filament of printable 3D printable material (such as indicated above). For the sake of clarity, not all features of the 3D printer have been depicted, only those that are of especial relevance (see further also below) Reference 321 indicates extrudate (of 3D printable material 201).

The 3D printer 500 is configured to generate a 3D item 1 by layer-wise depositing on a receiver item 550, which may in embodiments at least temporarily be cooled, a plurality of layers 322 wherein each layers 322 comprises 3D printable material 201, such as having a melting point Tₘ. The 3D printable material 201 may be deposited on a substrate 1550 (during the printing stage). By deposition, the 3D printable material 201 has become 3D printed material 202. 3D printable material 201 escaping from the nozzle 502 is also indicated as extrudate 321. Reference 401 indicates thermoplastic material.

The 3D printer 500 may be configured to heat the filament 320 material upstream of the printer nozzle 502. This may e.g. be done with a device comprising one or more of an extrusion and/or heating function. Such device is indicated with reference 573 and is arranged upstream from the printer nozzle 502 (i.e. in time before the filament material leaves the printer nozzle 502). The printer head 501 may (thus) include a liquefier or heater. Reference 201 indicates printable material. When deposited, this material is indicated as (3D) printed material, which is indicated with reference 202.

Reference 572 indicates a spool or roller with material, especially in the form of a wire, which may be indicated as filament 320. The 3D printer 500 transforms this in an extrudate 321 downstream of the printer nozzle which becomes a layer 322 on the receiver item or on already deposited printed material. In general, the diameter of the extrudate 321 downstream of the nozzle 502 is reduced relative to the diameter of the filament 322 upstream of the printer head 501. Hence, the printer nozzle is sometimes (also) indicated as extruder nozzle. Arranging layer 322 by layer 322, a 3D item 1 may be formed. Reference 575 indicates the filament providing device, which here amongst others include the spool or roller and the driver wheels, indicated with reference 576.

Reference A indicates a longitudinal axis or filament axis.

Reference C schematically depicts a control system, such as especially a temperature control system configured to control the temperature of the receiver item 550. The control system C may include a heater which is able to heat the receiver item 550 to at least a temperature of 50 °C, but especially up to a range of about 350 °C, such as at least 200 °C.

Alternatively or additionally, in embodiments the receiver plate may also be moveable in one or two directions in the x-y plane (horizontal plane). Further, alternatively or additionally, in embodiments the receiver plate may also be rotatable about z axis (vertical). Hence, the control system may move the receiver plate in one or more of the x-direction, y-direction, and z-direction.

Alternatively, the printer can have a head can also rotate during printing. Such a printer has an advantage that the printed material cannot rotate during printing.

Layers are indicated with reference 322, and have a layer height H and a layer width W.

Note that the 3D printable material is not necessarily provided as filament 320 to the printer head. Further, the filament 320 may also be produced in the 3D printer 500 from pieces of 3D printable material.

Reference D indicates the diameter of the nozzle (through which the 3D printable material 201 is forced).

Fig. 1b schematically depicts in 3D in more detail the printing of the 3D item 1 under construction. Here, in this schematic drawing the ends of the filaments 321 in a single plane are not interconnected, though in reality this may in embodiments be the case. Reference H indicates the height of a layer. Layers are indicated with reference 322. Here, the layers have an essentially circular cross-section. Often, however, they may be flattened, such as having an outer shape resembling a flat oval tube or flat oval duct (i.e. a circular shaped bar having a diameter that is compressed to have a smaller height than width, wherein the sides (defining the width) are (still) rounded).

Hence, Figs. 1a-1b schematically depict some aspects of a fused deposition modeling 3D printer 500, comprising (a) a first printer head 501 comprising a printer nozzle 502, (b) a filament providing device 575 configured to provide a filament 321 comprising 3D printable material 201 to the first printer head 501, and optionally (c) a receiver item 550. In Figs. 1a-1b, the first or second printable material or the first or second printed material are indicated with the general indications printable material 201 and printed material 202, respectively. Directly downstream of the nozzle 502, the filament 321 with 3D printable material becomes, when deposited, layer 322 with 3D printed material 202.

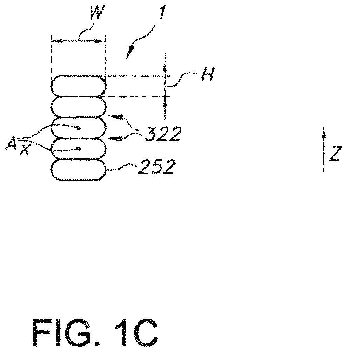

Fig. 1c schematically depicts a stack of 3D printed layers 322, each having a layer height H and a layer width W. Note that in embodiments the layer width and/or layer height may differ for two or more layers 322. Reference 252 in Fig. 1c indicates the item surface of the 3D item (schematically depicted in Fig. 1c).

Referring to Figs. 1a-1c, the filament of 3D printable material that is deposited leads to a layer having a height H (and width W). Depositing layer 322 after layer 322, the 3D item 1 is generated. Fig. 1c very schematically depicts a single-walled 3D item 1.

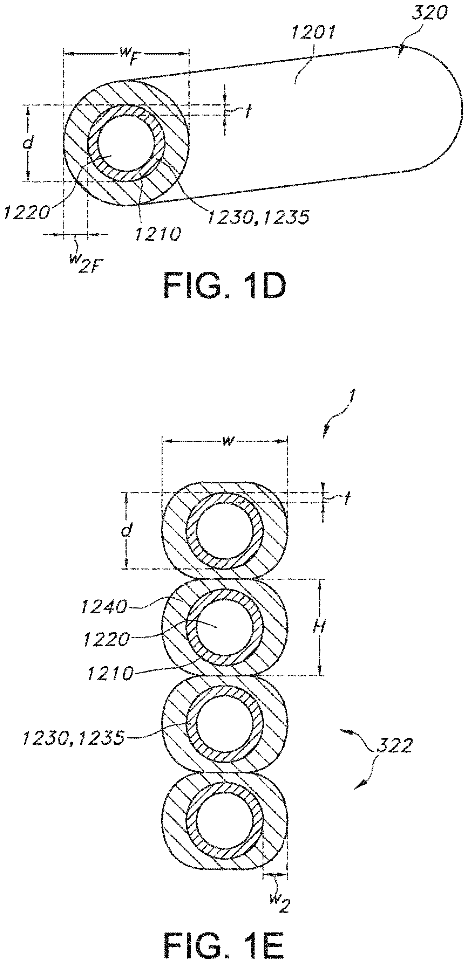

Fig 1d schematically depicts some further aspects of the method of the invention. Fig 1d depicts some embodiments of a (core-shell-shell) filament 320 that may be used in the method. The filament 320 may be used in a printer 500, e.g. as depicted in Fig. 1a-1b, having a nozzle 502 with a single opening. The geometry, especially the diameter of the tube d, the width of the filament WF and the thickness of the first shell t and second shell W2F in the filaments are indicated. The shell material 341 comprising shell polymeric material 345 completely encloses the hollow tube 1210.

Using the filament 320 of Fig. 1d in the 3D printing stage may in embodiments result in the 3D item 1 depicted in Fig. 1e.

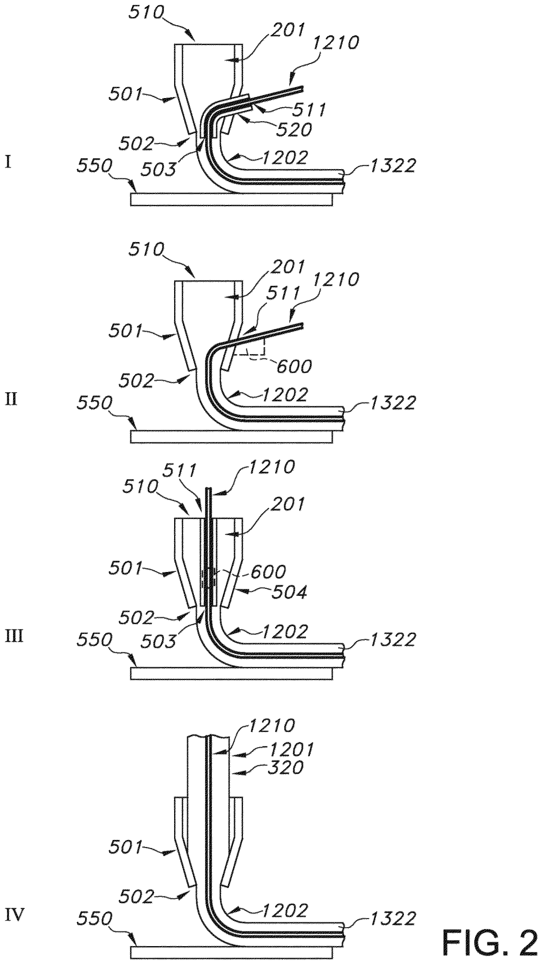

Fig 1e schematically depicts a stack of 3D printed core-shell-shell layers 1322. The layers comprise core-shell-shell layer 1322 of 3D printed material 1202 and comprising a hollow tube 1210 and a second shell 1340. The hollow tube 1210 comprises a hollow core 1220 and a first shell 1230 that comprises first shell material 1235. The second shell 1340 comprises a shell material 1341 comprising a second composition different from the first composition, e.g. in physical, chemical, and/or optical properties. Further, the diameter of the hollow tube 1210 is indicated with reference d, the thickness of the first shell 1230 is indicated with reference t, and the second shell 1340 has a shell width W2. The shell width W2 may herein also be referred to as thickness W2 of the second shell 1340. Fig. 2d depicts an embodiment wherein (in each core-shell-shell layer 1322) the shell 340 substantially complete encloses the hollow tube 1210.

Fig 2 schematically depicts embodiments of the method of the invention to incorporate a hollow tube 1210 into a printed core-shell-shell layer 1322 on a receiver item 550. The 3D printer 500 comprises a printer head 501. In embodiments I-III the printer head 501 comprises a printer nozzle 502, a first material entrance 510 for the 3D printable material 201 and a second material entrance 520 for the hollow tube 1210. The second material entrance may be a core entrance in a core-shell nozzle (III) or a separate entrance (I-II). The first material entrance 510 and the second material entrance 520 are in fluid contact with the printer nozzle 502. In embodiments I and III, the second material entrance 520 may comprise a glidant for the first shell 1230 of the hollow tube 1210. The printer 500 may comprise a cutting device 600 for cutting the hollow tube 1210 mechanically or by heating.

Alternatively, in embodiment IV, the printer head 501 comprises a printer nozzle 502 and a first material entrance 510 for insertion of a core-shell-shell filament 320.

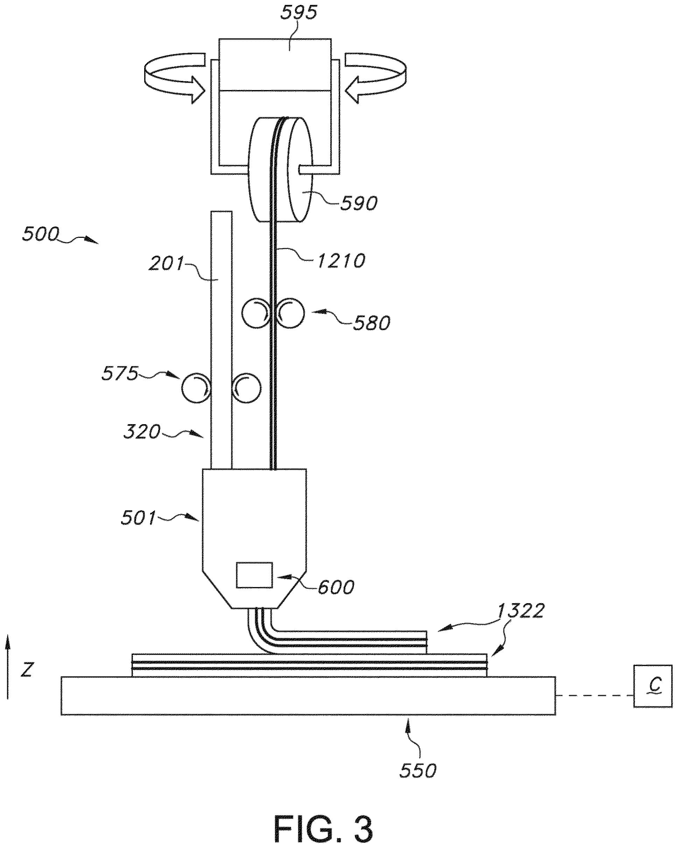

Fig 3 schematically depicts embodiments of the method of the invention to rotate the hollow tube 1210 in a synchronized manner with a movement of the printer nozzle 502 in respect to the receiver item 550 in order to avoid twisting of the tube during printing. The 3D printer 500 comprises a printer head 501, a filament providing device 575, a hollow tube providing device 580, a rotatable hollow tube reel 590 and a mechanism to rotate the hollow tube reel 595. Filament 320 comprising printable material 201 is inserted in the printer head 501 together with hollow tube 1210. The printer 500 transforms this in an extrudate downstream of the printer nozzle wherein the first shell and hollow core may be formed by the hollow tube 1210 and wherein the second shell may be formed by the printable material 201, which becomes layer 1322, comprising the hollow tube 1210 and the second shell comprising printed material 202 .

Reference C schematically depicts a control system, such as especially a temperature control system configured to control the temperature of the receiver item 550. The control system C may include a heater which is able to heat the receiver item 550 to at least a temperature of 50 °C, but especially up to a range of about 350 °C, such as at least 200 °C.

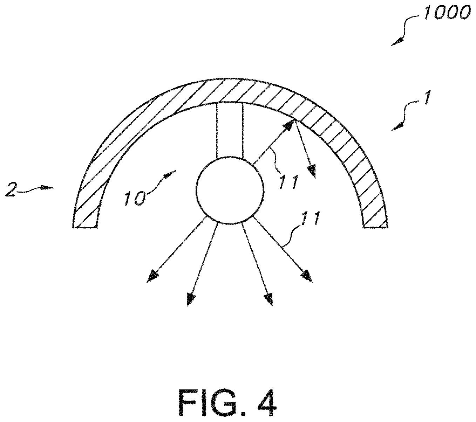

Fig. 4 schematically depicts an embodiment of a lamp or luminaire, indicated with reference 2, which comprises a light source 10 for generating light 11. The lamp may comprise a housing or shade or another element, which may comprise or be the 3D printed item 1. Here, the half sphere (in cross-sectional view) schematically indicates a housing or shade. The lamp or luminaire may be or may comprise a lighting device 1000 (which comprises the light source 10). Hence, in specific embodiments the lighting device 1000 comprises the 3D item 1. The 3D item 1 may be configured as one or more of (i) at least part of a lighting device housing, (ii) at least part of a wall of a lighting chamber, and (iii) an optical element. Hence, the 3D item may in embodiments be reflective for light source light 11 and/or transmissive for light source light 11. Here, the 3D item may e.g. be a housing or shade.

The term "plurality" refers to two or more.

The terms "substantially" or "essentially" herein, and similar terms, will be understood by the person skilled in the art. The terms "substantially" or "essentially" may also include embodiments with "entirely", "completely", "all", etc.... Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%.

The term "comprise" also includes embodiments wherein the term "comprises" means "consists of".

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

It goes without saying that one or more of the first (printable or printed) material and second (printable or printed) material may contain fillers such as glass and fibers which do not have (to have) influence on the on T_{g} or Tₘ of the material(s).

As indicated above, it may be desirable to reduce the weight of e.g. a printed luminaire as well as reduce the amount of material used in printing the luminaire. It appears therefore desirable to introduce air bubbles into the filament. Air bubbles reduce the density of the polymer leading to weight reduction of the printed item. Furthermore, introduction of air bubbles reduces the price of the filament leading to reduction of the cost of the printed object. Introducing porosity in polymers such as polystyrene can be achieved by introducing pentene followed by subjecting it to heat. It has also been observed that when a polymer filament containing moisture is heated to elevated temperatures the absorbed moisture in the filament leads to the formation of a porous structure. However, such a porous structure with sometimes irregularly shaped areas porosity do not look nice but they have problems with mechanical integrity.

Hence, it is herein amongst others suggested to feed a hollow tube together covered with a polymer melt to produce FDM prints where hollow tubes covered by a polymer are placed on top of each other. In such a printer the solid filament can be fed into the nozzle together with the polymer. For this purpose, for example a concentric nozzle configuration where the polymer is extruded through a ring surrounding the flexible tube can be used. One may also use a filament comprising a core and a shell, wherein the shell comprises a thermoplastic material and the core comprises a tube. In such cases, we further suggest rotating the tube carrier in a synchronized manner with the movement of the printer head in order to avoid/reduce the twisting of the tube during printing. When printing is made on a rotating stage then this measure is not needed.

In embodiments, hollow tubes with a diameter in the range 1-10mm may be used. The thickness of the tube can be in the range 0.1-0.3mm. The tube may also consist of a thermoplastic material having a glass transition temperature (Tg-tube) and a melting temperature (Tm-tube), wherein Tg-tube>Tg-shell polymer and Tm-tube>Tm-shell polymer.

The dimensions of the tube may be deformed during printing when the nozzle temperature (T-nozzle) is higher than Tg-tube but especially lower than Tm-tube. The tube may be cut or disappear when T-nozzle > Tm-tube. A cutter can also be included for cutting the tube at desired places.

In embodiments, a method for printing continuous hollow tubes is suggested, such as crosslinked tubes which may not melt using a FDM printer (where in embodiments the printer head moves in XY plane while the platform moves in the Z direction and a feeder is used to push a polymer to the printer head where the polymer melts and flows out the nozzle for obtaining a light structure with air in the tube). In such a printer the hollow tube can be fed into the nozzle together with the polymer as described above.

In embodiments, one may also use a filament comprising a core and a shell, wherein the shell comprises a thermoplastic material and the core comprises a tube.

During printing, the hollow tube becomes twisted. Amongst others, herein the use of a mechanism for rotating the hollow tube carrier (reel) in a synchronized manner with the movement of the printer head in order to avoid/reduce the twisting of the filament during printing. An embodiment thereof is schematically shown in Fig. 3.

As indicated above, in embodiments the tube may also consist of a thermoplastic material having a glass transition temperature (Tg-tube) and a melting temperature (Tm-tube), wherein Tg-tube>Tg-shell polymer and Tm-tube>Tm-shell polymer. During a first period the 3D printing the nozzle temperature (T-nozzle) may be below Tm-tube, and especially below Tg-tube. However, during a second period, the dimensions of the tube may be deformed during printing when the nozzle temperature (T-nozzle) is higher than Tg-tube but especially lower than Tm-tube. The tube may be cut or disappear when T-nozzle > Tm-tube. In embodiments, a cutter can also be included for cutting the filament at desired places. Furthermore, during printing at sections where no hollow tube is desired a break can be used to stop the tube pulled out by the viscous action of the flowing polymer.

## Claims

1. A method for producing a 3D item (1) by means of fused deposition modelling using a fused deposition modeling 3D printer (500), the method comprising a 3D printing stage comprising layer-wise depositing core-shell-shell material (1201) via a printer nozzle (502) on a receiver item (550), wherein the core-shell-shell material (1201) comprises a hollow tube (1210) comprising a hollow core (1220) and a first shell (1230) enclosing the hollow core (1220), and 3D printable material (201) at least partly enclosing the first shell (1230), to provide the 3D item (1) comprising a core-shell-shell layer (1322), wherein the core-shell-shell layer (1322) comprises the hollow tube (1210) comprising the hollow core (1220) and the first shell (1230) enclosing the hollow core (1220), and 3D printed material (202) at least partly enclosing the first shell (1230),
**characterized in that**
the first shell (1230) comprises a first shell material (1235) having a first glass transition temperature Tg1, the 3D printable material (201) has a second glass transition temperature Tg2, and Tg2<Tg1,
wherein the method comprises 3D printing the 3D printable material (201) with a printer nozzle temperature lower than the first glass transition temperature Tg1 and higher than the second glass transition temperature Tg2, and
wherein the method further comprises a cutting stage comprising temporarily heating the printer nozzle (502) to a temperature above the first glass transition temperature Tg1.

2. The method according to claim 1, wherein the printer nozzle (502) comprises a core-shell printer nozzle (502) comprising a core nozzle part (503) and a shell nozzle part (504), and wherein the method comprises: feeding the hollow tube (1210) via the core nozzle part (503) and feeding the 3D printable material (201) via the shell nozzle part (504).

3. The method according to any one of the preceding claims, wherein the fused deposition modeling 3D printer (500) comprises a printer head (501), wherein the printer head (501) comprises the printer nozzle (502), wherein the printer head (501) comprises a first material entrance (510) for the 3D printable material (201) and a second material entrance (520) for the hollow tube (1210), wherein the first material entrance (510), the second material entrance (520) are in fluid contact with the printer nozzle (502).

4. The method according to any one of the preceding claims 2-3, applying a glidant (520) to the first shell (1230) of the hollow tube (1210).

5. The method according to any one of the preceding claims, using a filament (320) comprising the core-shell-shell material (1201), and wherein the method comprises layer-wise depositing the filament (320) via the printer nozzle (502).

6. The method according to any one of the preceding claims, wherein the first shell (1230) comprises first shell material (1235), wherein the first shell material (1235) is crosslinked.

7. The method according to any one of the preceding claims, further comprising a synchronizing stage comprising: rotating the hollow tube (1210) in a synchronized manner with a movement of the printer nozzle (502) in respect to the receiver item (550), wherein the 3D printing stage and synchronizing stage at least partly overlap in time.

8. The method according to any one of the preceding claims, wherein the hollow tube (1210) has a diameter d of 0.2mm≤d≤20mm, and wherein the hollow tube (1210) has a wall thickness t of 0.02mm≤t≤1mm.

## Patentansprüche

1. Verfahren zum Herstellen eines 3D-Gegenstands (1) mittels Schmelzschichtung unter Verwendung eines Schmelzschichtungs-3D-Druckers (500), das Verfahren umfassend eine 3D-Druckphase, umfassend ein schichtweises Ablagern von Kern-Schale-Schale-Material (1201) über eine Druckerdüse (502) auf einem Empfängergegenstand (550), wobei das Kern-Schale-Schale-Material (1201) ein Hohlrohr (1210), umfassend einen hohlen Kern (1220) und eine erste Schale (1230), die den hohlen Kern (1220) umschließt, und 3D-druckbares Material (201) umfasst, das mindestens teilweise die erste Schale (1230) umschließt, um den 3D-Gegenstand (1) bereitzustellen, umfassend eine Kern-Schale-Schale-Schicht (1322), wobei die Kern-Schale-Schale-Schicht (1322) das Hohlrohr (1210), umfassend den hohlen Kern (1220) und die erste Schale (1230), die den hohlen Kern (1220) umschließt, und 3D-gedrucktes Material (202) umfasst, das mindestens teilweise die erste Schale (1230) umschließt, **dadurch gekennzeichnet, dass** die erste Schale (1230) ein erstes Schalenmaterial (1235) umfasst, das eine erste Glasübergangstemperatur Tg1 aufweist, wobei das 3D-druckbare Material (201) eine zweite Glasübergangstemperatur Tg2 aufweist und Tg2<Tg1 ist,
wobei das Verfahren das 3D-Drucken des 3D-druckbaren Materials (201) mit einer Druckerdüsentemperatur umfasst, die niedriger als die erste Glasübergangstemperatur Tg1 und höher als die zweite Glasübergangstemperatur Tg2 ist, und
wobei das Verfahren ferner eine Schneidephase umfasst, umfassend das vorübergehende Erhitzen der Druckerdüse (502) auf eine Temperatur über der ersten Glasübergangstemperatur Tg1.

2. Verfahren nach Anspruch 1, wobei die Druckerdüse (502) eine Kern-Schale-Druckerdüse (502) umfasst, umfassend einen Kerndüsenteil (503) und einen Schalendüsenteil (504), und wobei das Verfahren umfasst: Zuführen des Hohlrohrs (1210) über den Kerndüsenteil (503) und Zuführen des 3D-druckbaren Materials (201) über den Schalendüsenteil (504).

3. Verfahren nach einem der vorstehenden Ansprüche, wobei der Schmelzschichtungs-3D-Drucker (500) einen Druckerkopf (501) umfasst, wobei der Druckerkopf (501) die Druckerdüse (502) umfasst, wobei der Druckerkopf (501) einen ersten Materialeingang (510) für das 3D-druckbare Material (201) und einen zweiten Materialeingang (520) für das Hohlrohr (1210) umfasst, wobei der erste Materialeingang (510) und der zweite Materialeingang (520) in Fluidkontakt mit der Druckerdüse (502) stehen.

4. Verfahren nach einem der vorstehenden Ansprüche 2 bis 3, wobei ein Gleitmittel (520) auf die erste Schale (1230) des Hohlrohrs (1210) aufgetragen wird.

5. Verfahren nach einem der vorstehenden Ansprüche, bei dem ein Filament (320) verwendet wird, umfassend das Kern-Schale-Schale-Material (1201), und wobei das Verfahren das schichtweise Ablagern des Filaments (320) über die Druckerdüse (502) umfasst.

6. Verfahren nach einem der vorstehenden Ansprüche, wobei die erste Schale (1230) ein erstes Schalenmaterial (1235) umfasst, wobei das erste Schalenmaterial (1235) vernetzt ist.

7. Verfahren nach einem der vorstehenden Ansprüche, ferner umfassend eine Synchronisierungsphase, umfassend: Drehen des Hohlrohrs (1210) auf eine synchronisierte Weise mit einer Bewegung der Druckerdüse (502) in Bezug auf den Empfängergegenstand (550), wobei sich die 3D-Druckphase und die Synchronisierungsphase mindestens teilweise zeitlich überlappen.

8. Verfahren nach einem der vorstehenden Ansprüche, wobei das Hohlrohr (1210) einen Durchmesser d von 0,2 mm ≤ d ≤ 20 mm aufweist, und wobei das Hohlrohr (1210) eine Wandstärke t von 0,02 mm ≤ t ≤ 1 mm aufweist.

## Revendications

1. Procédé de production d'un article 3D (1) au moyen d'une modélisation de dépôt fusionné à l'aide d'une imprimante 3D à modélisation de dépôt fusionné (500), le procédé comprenant une étape d'impression 3D comprenant le dépôt par couches d'un matériau noyau-coquille-coquille (1201) par l'intermédiaire d'une buse d'imprimante (502) sur un article récepteur (550), le matériau noyau-coquille-coquille (1201) comprenant un tube creux (1210) comprenant un noyau creux (1220) et une première coquille (1230) renfermant le noyau creux (1220), et un matériau imprimable en 3D (201) renfermant au moins partiellement la première coquille (1230), pour fournir l'objet 3D (1) comprenant une couche noyau-coquille-coquille (1322), dans lequel la couche noyau-coquille-coquille (1322) comprend le tube creux (1210) comprenant le noyau creux (1220) et la première coquille (1230) renfermant le noyau creux (1220), et un matériau imprimé en 3D (202) renfermant au moins partiellement la première coquille (1230), **caractérisé en ce que** la première coquille (1230) comprend un premier matériau de coquille (1235) ayant une première température de transition vitreuse Tg1, le matériau imprimable en 3D (201) a une seconde température de transition vitreuse Tg2, et Tg2<Tg1,
dans lequel le procédé comprend l'impression 3D du matériau imprimable en 3D (201) avec une température de buse d'imprimante inférieure à la première température de transition vitreuse Tg1 et supérieure à la seconde température de transition vitreuse Tg2, et
dans lequel le procédé comprend en outre une étape de coupe comprenant le fait de chauffer temporairement la buse de l'imprimante (502) à une température supérieure à la première température de transition vitreuse Tg1.

2. Procédé selon la revendication 1, dans lequel la buse d'imprimante (502) comprend une buse d'imprimante noyau-coquille (502) comprenant une partie de buse noyau (503) et une partie de buse coquille (504), et dans lequel le procédé comprend : l'alimentation du tube creux (1210) par l'intermédiaire de la partie de buse noyau (503) et l'alimentation du matériau imprimable en 3D (201) par l'intermédiaire de la partie de buse coquille (504).

3. Procédé selon l'une quelconque des revendications précédentes, dans lequel l'imprimante 3D à modélisation par dépôt fusionné (500) comprend une tête d'imprimante (501), dans lequel la tête d'imprimante (501) comprend la buse d'imprimante (502), dans lequel la tête d'imprimante (501) comprend une première entrée de matériau (510) pour le matériau imprimable en 3D (201) et une seconde entrée de matériau (520) pour le tube creux (1210), dans lequel la première entrée de matériau (510), la seconde entrée de matériau (520) est en contact fluidique avec la buse d'imprimante (502).

4. Procédé selon l'une quelconque des revendications précédentes 2 à 3, appliquant un agent de glissement (520) à la première coquille (1230) du tube creux (1210).

5. Procédé selon l'une quelconque des revendications précédentes, utilisant un filament (320) comprenant le matériau noyau-coquille-coquille (1201), et dans lequel le procédé comprend le dépôt en couches du filament (320) par l'intermédiaire de la buse de l'imprimante (502).

6. Procédé selon l'une quelconque des revendications précédentes, dans lequel la première coquille (1230) comprend un matériau de première coquille (1235), dans laquelle le matériau de première coquille (1235) est réticulé.

7. Procédé selon l'une quelconque des revendications précédentes, comprenant en outre une étape de synchronisation comprenant : la rotation du tube creux (1210) d'une manière synchronisée avec un mouvement de la buse de l'imprimante (502) par rapport à l'article récepteur (550), dans lequel l'étape d'impression en 3D et l'étape de synchronisation se chevauchent au moins partiellement dans le temps.

8. Procédé selon l'une quelconque des revendications précédentes, dans lequel le tube creux (1210) a un diamètre d de 0,2 mm≤d≤20 mm, et dans lequel le tube creux (1210) a une épaisseur de paroi t de 0,02 mm≤t≤1 mm.
